# EUROPÄISCHE PATENTANMELDUNG

(11) **EP 3 505 780 A1**
(43) Veröffentlichungstag der Anmeldung: **03.07.2019**
(21) Anmeldenummer: 18210981.9
(22) Anmeldetag: 07.12.2018
(51) Int. Cl.: F16B 5/06, F16B 21/08, F16B 37/04

(54) **SYSTEM ZUM VERBINDEN EINES ERSTEN BAUTEILS MIT EINEM ZWEITEN BAUTEIL**

(30) Priorität: 27.12.2017 DE 202017006630 U
(71) Anmelder: REHAU AG + Co, 95111 Rehau (DE)
(72) Erfinder: Sperrer, Carsten, 95689 Fuchsmühl (DE); Horak, Petr, 14700 Praha 4 (CZ); Kryspin, Radek, 14900 Praha 4 - Seberov (CZ); Petrik, Vaclav, 76005 Zlin (CZ)

(57) **Zusammenfassung**

Die Erfindung betrifft System zum Verbinden eines ersten Bauteils (1) mit einem zweiten Bauteil (2), umfassend ein aus Kunststoffmaterial gebildetes erstes Bauteil (1), und ein Verbindungselement (3) zur Verbindung des ersten Bauteils (1) mit dem zweiten Bauteil (2), wobei das Verbindungselement (3) eine Sockelplatte (3a) und einen von der Sockelplatte (3a) abstehenden und mit der Sockelplatte (3a) verbundenen Schaft (3b) aufweist. An dem ersten Bauteil (1) ist ein Rastelement (9) einstückig angeformt, wobei das Rastelement (9) einen Rastfinger (10) aufweist der von einer Einführöffnung (7) beabstandet ist. Bei einer unterschiedlichen Wärmeausdehnung des ersten Bauteils (1) in Relation zu dem zweiten Bauteil (2) bleibt die Sockelplatte (3a) verschiebbar, indem der Rastfinger (10) mittels des Rastvorsprungs (12) erneut durch das Verbindungselement (3) auslenkbar ist.

## Beschreibung

Die vorliegende Erfindung betrifft ein System zum Verbinden eines ersten Bauteils mit einem zweiten Bauteil, umfassend ein aus Kunststoffmaterial gebildetes erstes Bauteil, und ein Verbindungselement zur Verbindung des ersten Bauteils mit dem zweiten Bauteil, wobei das Verbindungselement ein Sockelplatte und einen von der Sockelplatte abstehenden und mit der Sockelplatte verbundenen Schaft aufweist, wobei das erste Bauteil einen flächigen Verbindungsabschnitt mit einer Dicke D aufweist und der Schaft des Verbindungselementes, im mit dem ersten Bauteil verbundenen Zustand des Verbindungselementes, in einer Aussparung des Verbindungsabschnittes aufgenommen ist, wobei die Aussparung an einer ersten Seite eine seitliche Einführöffnung für den Schaft aufweist und, wobei im verbunden Zustand der Schaft zwischen zwei gegenüberliegenden Seitenränder der Aussparung zumindest formschlüssig gehalten ist.

Ein derartiges System ist im Stand der Technik beispielsweise aus dem Dokument DE 601 27 893 T2 vorbekannt.

Problematisch an Systemen des Stands der Technik ist, dass bei der Herstellung eines aus Kunststoffmaterial gebildeten ersten Bauteils Schwankungen hinsichtlich der Bauteiltoleranzen unvermeidlich sind. Zudem weisen Kunststoffmaterialien einen hohen thermischen Ausdehnungskoeffizient auf, sodass ein mit dem ersten Bauteil verbundenes Verbindungselement aufgrund der thermischen Ausdehnung des ersten Bauteils und oder des zweiten Bauteils sich von dem ersten Bauteil löst und nicht in seine ursprünglich vorgesehene Position zurückkehrt.

Aufgabe der vorliegenden Erfindung ist es daher ein gattungsgemäßes System anzugeben, dass einem lösen der Verbindung zwischen dem ersten Bauteil und dem Verbindungselement zu dem zweiten Bauteil aufgrund von thermischer Ausdehnung vermeidet.

Diese Aufgabe wird erfindungsgemäß gelöst durch ein System zum Verbinden eines ersten Bauteils mit einem zweiten Bauteil, umfassend:
- ein aus Kunststoffmaterial gebildetes erstes Bauteil, und
- ein Verbindungselement zur Verbindung des ersten Bauteils mit dem zweiten Bauteil,
wobei das Verbindungselement eine Sockelplatte und einen von der Sockelplatte abstehenden und mit der Sockelplatte verbundenen Schaft aufweist, wobei das erste Bauteil einen flächigen Verbindungsabschnitt mit einer Dicke D aufweist und der Schaft des Verbindungselementes, im mit dem ersten Bauteil verbundenen Zustand des Verbindungselementes, in einer Aussparung des Verbindungsabschnitts aufgenommen ist, wobei die Aussparung an einer ersten Seite eine seitliche Einführöffnung für den Schaft aufweist und, wobei im verbunden Zustand der Schaft zwischen zwei gegenüberliegenden Seitenränder der Aussparung zumindest formschlüssig gehalten ist. Erfindungsgemäß ist an dem ersten Bauteil ein Rastelement einstückig angeformt, wobei das Rastelement einen Rastfinger aufweist der von der Einführöffnung beabstandet auf einer Verlängerung eines der Seitenränder der Aussparung beginnt und in einem Winkel auf die Aussparung zu orientiert ist, wobei der Endbereich des Rastfingers in Richtung des ihm gegenüberliegenden Aussparungsende orientiert ist, wobei der Rastfinger von dem Verbindungsabschnitt beabstandet ist und, wobei im Bereich unterhalb der Einführöffnung von dem Endbereich des Rastfingers ein Rastvorsprung absteht, der in Richtung Einführöffnung orientiert ist, wobei in dem verbundenen Zustand die Sockelplatte des Verbindungselements zwischen dem flächigen Verbindungsabschnitt, den Seitenrändern der Aussparung und dem Rastvorsprung zumindest formschlüssig gehalten ist, sodass bei einer unterschiedlichen Wärmeausdehnung des ersten Bauteils in Relation zu dem zweiten Bauteil die Sockelplatte verschiebbar bleibt, indem der Rastfinger mittels des Rastvorsprungs erneut durch das Verbindungselement auslenkbar ist.

Die erfindungsgemäße Ausgestaltung des Systems ermöglicht es dem Verbindungselement bei auftretenden Wärmeausdehnungen, und hiermit verbundenen Spannungen, diesen Dehnungen bzw. Spannungen auszuweichen, und bei Wegfall der Wärmeausdehnung in den Verbauzustand zurückzukehren. Der Rastfinger des Systems mit seinem Rastvorsprung dient hierbei im Verbauzustand der Sicherung der gewünschten Verbauposition des Verbindungselementes in Relation zu dem ersten Bauteil. Gleichzeitig kann der auslenkbaren Rastfinger bei einer wärmebedingten Verlagerung des Verbindungselementes ausweichen, um der Wärmeausdehnung bzw. den Wärmespannungen zu folgen.

Die Sockelplatte liegt im verbundenen Zustand bevorzugt mit einer Seite auf dem Verbindungsabschnitt auf, und mit einem Teil der gegenüberliegenden Seite an dem Rastvorsprung und/oder dem Rastfinger an. Die Aussparung ist hierbei schmaler dimensioniert als die Sockelplatte in der entsprechenden Raumrichtung, sodass die Sockelplatte nicht durch die Aussparung fallen kann.

Vorteilhaft kann der Schaft des Verbindungselementes zusätzlich an einem Anschlag auf wenigstens einer der Seitenränder der Aussparung anliegen. Ein entsprechender Anschlag lässt sich in der Abstimmungsphase (zum Beispiel zwischen verschiedenen Prototypen) relativ einfach in der Position verschieben, um die optimale spätere Verbauposition des Verbindungselementes zu ermitteln. Selbiger Anschlag kann punktförmig oder linienförmig ausgebildet sein.

Die Dicke der Sockelplatte kann dem Abstand zwischen dem Rastfinger und dem flächigen Verbindungsabschnitt entsprechen. Selbstredend ist hier auch ein größerer Abstand als die Dicke der Sockelplatte möglich.

Der Rastvorsprung kann eine Aufgleitrampe für die Sockelplatte aufweisen, die derart ausgebildet ist, dass beim Einführen des Schafts des Verbindungselements in die Aussparung die Sockelplatte den Rastfinger von dem Verbindungsabschnitt weg auslenkt, sodass die Sockelplatte in den Raum zwischen dem Rastfinger und dem Verbindungsabschnitt gleiten kann.

Bevorzugt kann das erste Bauteil eine Verstärkungsstruktur für das zweite Bauteil ausbilden oder umfassen. Das erste Bauteil kann ein Heckspoiler, eine Stoßfängerverkleidung, eine Kotflügelverkleidung, eine Seitenschutzleiste, eine Türverkleidung oder eine Klappenverkleidung sein, oder kann Teil eines Heckspoilers, einer Stoßfängerverkleidung, einer Kotflügelverkleidung, einer Seitenschutzleiste, einer Türverkleidung oder einer Klappenverkleidung sein.

Das Verbindungselement kann ferner eine mit dem Schaft verbundene Klemmplatte aufweisen, wobei die Klemmplatte von der Sockelplatte in einem Abstand angeordnet ist, der größer oder gleich der Dicke D des Verbindungsabschnitts ist und, wobei im verbundenen Zustand die Sockelplatte und die Klemmplatte den Verbindungsabschnitt bereichsweise zwischen sich einfassen. Auf der Klemmplatte kann ein Dichtelement vorgesehen sein, das in Richtung des zweiten Bauteils orientiert ist und zu diesem hin abdichtet.

Das erste Bauteil kann in einem Spritzgussverfahren oder in einem generativen Verfahren (beispielsweise im 3D Druck) hergestellt sein.

Bevorzugt weist die Sockelplatte eine rechteckige Geometrie auf. Weiter bevorzugt eine viereckige oder eine quadratische oder eine runde oder eine ovale Geometrie auf.

Das System kann ferner ein zweites Bauteil umfassen, wobei das zweite Bauteil ein Karosserieteil eines Kraftfahrzeuges oder ein Verkleidungsteil eines Kraftfahrzeuges ist.

Das Kunststoffmaterial des ersten Bauteils kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC), Acrylnitril-Styrol-Acrylat-Copolymere (ASA) oder Mischungen der vorgenannten Materialen umfassen. Wobei bevorzugt ein Acrylnitril-Styrol-Acrylat-Copolymere (ASA) Verwendung findet. Sämtliche vorgenannten Kunststoffmaterialien oder Mischungen von Kunststoffmaterialien können zudem Verstärkungsfasern oder Verstärkungspartikel aufweisen.

Die Erfindung wird anhand eines Ausführungsbeispiels näher erläutert.

Es zeigen:
- Fig. 1:: Dreidimensionale Ansichten des Systems in unterschiedlichen Montagezuständen des Verbindungselementes mit dem ersten Bauteil;
- Fig. 2:: Querschnittsdarstellungen des Systems gemäß der Fig. 1 in unterschiedlichen Montagezuständen des Verbindungselementes mit dem ersten Bauteil und ein zweites Bauteil.

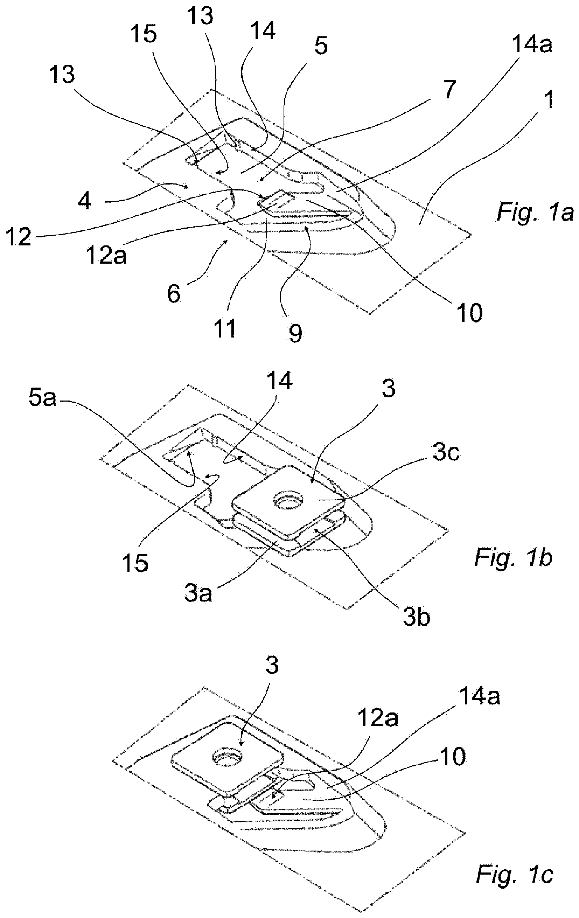

In der Fig. 1 sind jeweils verschiedene Ansichten des gleichen Systems zum Verbinden eines ersten Bauteils mit einem zweiten Bauteil dargestellt.

In sämtlichen Figuren stellt die Abfolge a bis c die folgenden Montagezustände dar:
Verbindungselement nicht montiert - Verbindungselement während der Montage - Verbindungselement in Verbauposition bzw. Verbindungszustand zwischen dem ersten Bauteil und dem Verbindungselement

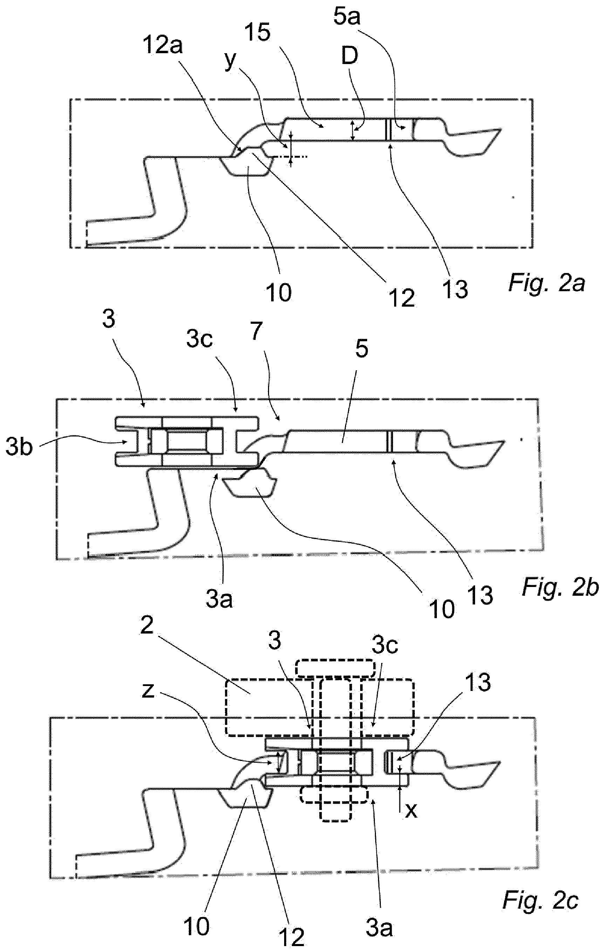

Die Fig. 1 (Fig. 1a-1c) zeigt in perspektivischer Darstellung verschiedene Montagezustände des Systems zum Verbinden eines ersten Bauteils 1 mit einem zweiten Bauteil 2, umfassend:
- ein aus Kunststoffmaterial gebildetes erstes Bauteil 1, und
- ein Verbindungselement 3 zur Verbindung des ersten Bauteils 1 mit dem zweiten Bauteil 2,
wobei das Verbindungselement 3 eine Sockelplatte 3a und einen von der Sockelplatte 3a abstehenden und mit der Sockelplatte 3a verbundenen Schaft 3b (vgl. Querschnittsdarstellungen aus Fig. 2) aufweist.

Das erste Bauteil 1 weist einen flächigen Verbindungsabschnitt 4 mit einer Dicke D auf und der Schaft 3b des Verbindungselementes 3 ist, im mit dem ersten Bauteil 1 verbundenen Zustand des Verbindungselementes 3, in einer Aussparung 5 des Verbindungsabschnitts 4 aufgenommen, wobei die Aussparung 5 an einer ersten Seite 6 eine seitliche Einführöffnung 7 für den Schaft 3b aufweist. Im verbunden Zustand ist der Schaft 3b zwischen zwei gegenüberliegenden Seitenränder 14, 15 der Aussparung 5 zumindest formschlüssig gehalten.

An dem ersten Bauteil 1 ist ein Rastelement 9 einstückig angeformt, wobei das Rastelement 9 einen Rastfinger 10 aufweist der von der Einführöffnung 7 beabstandet auf einer Verlängerung 14 a eines der Seitenränder 14, 15 der Aussparung 5 beginnt und in einem Winkel auf die Aussparung 5 zu orientiert ist, wobei der Endbereich 11 des Rastfingers 10 in Richtung des ihm gegenüberliegenden Aussparungsende 5a orientiert ist. Der Rastfinger 10 ist von dem Verbindungsabschnitt 4 beabstandet. Im Bereich unterhalb der Einführöffnung 7 steht von dem Endbereich 11 des Rastfingers 10 ein Rastvorsprung 12 ab, der in Richtung Einführöffnung 7 orientiert ist. In dem verbundenen Zustand ist die Sockelplatte 3a des Verbindungselements 3 zwischen dem flächigen Verbindungsabschnitt 4, den Seitenrändern 14, 15 der Aussparung 5 und dem Rastvorsprung 12 zumindest formschlüssig gehalten, sodass bei einer unterschiedlichen Wärmeausdehnung des ersten Bauteils 1 in Relation zu dem zweiten Bauteil 2 die Sockelplatte 3a verschiebbar bleibt, indem der Rastfinger 10 mittels des Rastvorsprungs 12 erneut durch das Verbindungselement 3 auslenkbar ist.

Die Sockelplatte 3a liegt im verbundenen Zustand mit einer Seite auf dem Verbindungsabschnitt 4 auf, und mit einem Teil der gegenüberliegenden Seite an dem Rastvorsprung 12a und/oder dem Rastfinger 10 an.

Der Schaft 3b liegt zusätzlich an einem Anschlag 13 auf wenigstens einer der Seitenränder 14, 15 der Aussparung 5 an. Die Dicke x der Sockelplatte 3a entspricht dem Abstand y zwischen der dem Rastfinger 10 und dem flächigen Verbindungsabschnitt 4 (vgl. auch Fig. 2). Der Rastvorsprung 12 weist eine Aufgleitrampe 12a für die Sockelplatte 3a auf, die derart ausgebildet ist, das beim Einführen des Schafts des 3b des Verbindungselements 3 in die Aussparung 5 die Sockelplatte 3a den Rastfinger 10 von dem Verbindungsabschnitt 4 weg auslenkt, sodass die Sockelplatte 3a in den Raum zwischen dem Rastfinger 10 und dem Verbindungsabschnitt 4 gleiten kann (vgl. auch Fig. 2).

Das erste Bauteil 1 umfasst oder bildet eine Verstärkungsstruktur für das zweite Bauteil 2 aus.

Das Verbindungselement 3 weist ferner eine mit dem Schaft 3b verbundene Klemmplatte 3c auf, wobei die Klemmplatte 3c von der Sockelplatte 3a in einem Abstand z angeordnet ist, der größer oder gleich der Dicke D des Verbindungsabschnitts 4 ist und, wobei im verbundenen Zustand die Sockelplatte 3a und die Klemmplatte 3c den Verbindungsabschnitt 4 bereichsweise zwischen sich einfassen (vgl. Fig. 2).

Das erste Bauteil 1 ist in einem Spritzgussverfahren oder in einem generativen Verfahren (zum Beispiel in einem 3-D Druckverfahren) hergestellt.

Die Sockelplatte 3a weist eine rechteckige Geometrie, im konkreten Fall eine quadratische Geometrie auf.

Die Fig. 2 stellt Querschnittsdarstellungen des Systems gemäß der Fig. 1 in unterschiedlichen Montagezuständen des Verbindungselementes mit dem ersten Bauteil und ein zweites Bauteil dar. In Fig. 2 (Fig. 2a-2c) umfasst das wie vorstehend beschriebene System das zweite Bauteil 2 (schematisch dargestellt), wobei das zweite Bauteil 2 ein Karosserieteil eines Kraftfahrzeuges oder ein Verkleidungsteil eines Kraftfahrzeuges ist. Selbiges zweites Bauteil 2 ist über das Verbindungselement 3 und hierüber mit dem ersten Bauteil 1 verbunden. Zum lösbaren verbinden ist beispielsweise eine Schraubverbindung (schematisch angedeutet) denkbar.

Bevorzugt kann das erste Bauteil 1 eine Verstärkungsstruktur für das zweite Bauteil 2 ausbilden oder umfassen. Das erste Bauteil 1 kann ein Heckspoiler, eine Stoßfängerverkleidung, eine Kotflügelverkleidung, eine Seitenschutzleiste, eine Türverkleidung oder eine Klappenverkleidung sein, oder kann Teil eines Heckspoilers, einer Stoßfängerverkleidung, einer Kotflügelverkleidung, einer Seitenschutzleiste, einer Türverkleidung oder einer Klappenverkleidung sein. Die Ausführungen zu Fig. 1 gelten entsprechend für die Abfolge Fig. 2a-c der Fig 2.

## Patentansprüche

1. System zum Verbinden eines ersten Bauteils (1) mit einem zweiten Bauteil (2), umfassend:
- ein aus Kunststoffmaterial gebildetes erstes Bauteil (1), und
- ein Verbindungselement (3) zur Verbindung des ersten Bauteils (1) mit dem zweiten Bauteil (2),
wobei das Verbindungselement (3) eine Sockelplatte (3a) und einen von der Sockelplatte (3a) abstehenden und mit der Sockelplatte (3a) verbundenen Schaft (3b) aufweist,
wobei das erste Bauteil (1) einen flächigen Verbindungsabschnitt (4) mit einer Dicke D aufweist und der Schaft (3b) des Verbindungselementes (3), im mit dem ersten Bauteil (1) verbundenen Zustand des Verbindungselementes (3), in einer Aussparung (5) des Verbindungsabschnitts (4) aufgenommen ist, wobei die Aussparung (5) an einer ersten Seite (6) eine seitliche Einführöffnung (7) für den Schaft (3b) aufweist, und
wobei im verbunden Zustand der Schaft zwischen zwei gegenüberliegenden Seitenränder (14, 15) der Aussparung (5) zumindest formschlüssig gehalten ist,
**dadurch gekennzeichnet, dass**
an dem ersten Bauteil (1) ein Rastelement (9) einstückig angeformt ist, wobei das Rastelement (9) einen Rastfinger (10) aufweist der von der Einführöffnung (7) beabstandet auf einer Verlängerung (14 a) eines der Seitenränder (14, 15) der Aussparung (5) beginnt und in einem Winkel auf die Aussparung (5) zu orientiert ist, wobei der Endbereich (11) des Rastfingers (10) in Richtung des ihm gegenüberliegenden Aussparungsende (5a) orientiert ist,
wobei der Rastfinger (10) von dem Verbindungsabschnitt (4) beabstandet ist und,
wobei im Bereich unterhalb der Einführöffnung (7) von dem Endbereich (11) des Rastfingers (10) ein Rastvorsprung (12) absteht, der in Richtung Einführöffnung (7) orientiert ist,
wobei in dem verbundenen Zustand die Sockelplatte (3a) des Verbindungselements (3) zwischen dem flächigen Verbindungsabschnitt (4), den Seitenrändern (14, 15) der Aussparung (5) und dem Rastvorsprung (12) zumindest formschlüssig gehalten ist, sodass bei einer unterschiedlichen Wärmeausdehnung des ersten Bauteils (1) in Relation zu dem zweiten Bauteil (2) die Sockelplatte (3a) verschiebbar bleibt, indem der Rastfinger (10) mittels des Rastvorsprungs (12) erneut durch das Verbindungselement (3) auslenkbar ist.

2. System nach Anspruch 1, **dadurch gekennzeichnet, dass** der Schaft (3b) zusätzlich an einem Anschlag (13) auf wenigstens einer der Seitenränder (14, 15) der Aussparung (5) anliegt.

3. System nach Anspruch 1 oder 2, **dadurch gekennzeichnet, dass** die Dicke (x) der Sockelplatte (3a) dem Abstand (y) zwischen dem Rastfinger (10) und dem flächigen Verbindungsabschnitt (4) entspricht.

4. System nach einem der vorstehenden Ansprüche, **dadurch gekennzeichnet, dass** der Rastvorsprung (12) eine Aufgleitrampe (12a) für die Sockelplatte (3a) aufweist, die derart ausgebildet ist, dass beim Einführen des Schafts (3b) des Verbindungselements (3) in die Aussparung (5) die Sockelplatte (3a) den Rastfinger (10) von dem Verbindungsabschnitt (4) weg auslenkt, sodass die Sockelplatte (3a) in den Raum zwischen dem Rastfinger (10) und dem Verbindungsabschnitt (4) gleiten kann.

5. System nach einem der vorstehenden Ansprüche, **dadurch gekennzeichnet, dass** das erste Bauteil (1) eine Verstärkungsstruktur für das zweite Bauteil (2) ausbildet oder umfasst.

6. System nach einem der vorstehenden Ansprüche, **dadurch gekennzeichnet, dass** das Verbindungselement (3) ferner eine mit dem Schaft (3b) verbundene Klemmplatte (3c) aufweist, wobei die Klemmplatte (3c) von der Sockelplatte (3a) in einem Abstand (z) angeordnet ist, der größer oder gleich der Dicke D des Verbindungsabschnitts (4) ist und, wobei im verbundenen Zustand die Sockelplatte (3a) und die Klemmplatte (3c) den Verbindungsabschnitt (4) bereichsweise zwischen sich einfassen.

7. System nach einem der vorstehenden Ansprüche, **dadurch gekennzeichnet, dass** das erste Bauteil (1) in einem Spritzgussverfahren oder in einem generativen Verfahren hergestellt ist.

8. System nach einem der vorstehenden Ansprüche, **dadurch gekennzeichnet, dass** die Sockelplatte (3a) eine rechteckige, runde oder ovale Geometrie aufweist.

9. System nach einem der vorstehenden Ansprüche, mit einem zweiten Bauteil (2), wobei das zweite Bauteil (2) ein Karosserieteil eines Kraftfahrzeuges oder ein Verkleidungsteil eines Kraftfahrzeuges ist.
